# FASCICULE DE BREVET EUROPEEN

(11) **EP 2 415 703 B1**
(45) Date de publication et mention de la délivrance du brevet: **08.08.2018**
(21) Numéro de dépôt: 09842540.8
(22) Date de dépôt: 02.04.2009
(51) Int. Cl.: B66B 7/02

(54) **SYSTÈME D'ACCOUPLEMENT À AUTO-ALIGNEMENT, POUR GUIDES D'ASCENSEUR**
VERBINDUNGSSYSTEM MIT SELBSTAUSRICHTUNG FÜR AUFZUGFÜHRUNGEN
CONNECTION SYSTEM, WITH SELF-ALIGNMENT, FOR ELEVATOR GUIDES

(43) Date de publication de la demande: 08.02.2012
(73) Titulaire: S.A. de Vera ( Savera), 31780 Vera de Bidasoa (ES)
(72) Inventeur: SANZ GAMBOA, Jesús, 31780 Vera de Bidasoa (Navarra) (ES)
(74) Mandataire: Urizar Barandiaran, Miguel Angel
(86) Numéro de dépôt international: PCT/ES2009/000181
(87) Numéro de publication internationale: WO 2010/112620

(56) Documents cités:
- EP-A1- 1 498 381
- EP-A1- 1 743 863
- WO-A1-03/048456
- ES-A1- 2 255 351
- ES-A1- 2 320 949
- ES-T3- 2 047 651
- JP-A- 9 086 825
- US-A- 3 252 495

## Description

La présente invention concerne un système d'union avec auto-alignement pour guides d'ascenseur.

L'état de la technique actuel propose déjà différents systèmes pour union alignée de guides d'ascenseur comportant des guides avec âme-champignon et ailes latérales et des plaques pour l'union de ces guides entre eux. Le demandeur lui-même a développé des systèmes de ce type et est propriétaire, entre autres, des brevets WO 01/47796 et WO 2005/070805, qui créent une pression frontale d'alignement entre les guides et leurs plaques d'union.

Le document ES 2255351 A1 divulgue un système d'accouplement selon le préambule de la revendication 1. Le système d'accouplement à auto-alignement, pour guides d'ascenseur objet de l'invention signifie une grande amélioration par rapport aux systèmes de montage connus jusqu'à présent par le fait qu'il crée une pression frontale d'alignement entre les guides à unir.

Le problème qui se pose avec les guides unis et auto-alignés des systèmes connus consiste dans le fait que soumis à des forces (F) latérales dans les zones d'union des guides, ceux-ci se comportent comme une poutre subissant des tensions de compression du côté d'application des forces (F) et de traction du côté opposé à celui d'application de ces forces (F), et de ce fait ont tendance à se séparer par ce côté opposé et à se désaligner entre eux.

Un second problème découlant de l'auto-alignement des guides sous les systèmes connus le constitue le fait que usinages de précision sont nécessaires sur les faces latérales du guide et de la plaque d'union, c'est-à-dire, au moins deux usinages de précision indépendants.

Les deux problèmes ont été résolus par ce brevet de la manière suivante :
a) les surfaces frontales possèdent une finition de précision formant un angle parfait de 90° entre ces surfaces frontales par rapport à l'axe longitudinal de chaque guide ;
b) les ailes des deux guides à unir s'unissent bout à bout, en contactant parfaitement entre elles sur toute leur surface de contact ;
c) chaque aile possède des trous passants ;
d) la plaque d'union possède des trous passants coïncidant avec les trous des ailes ;
e) des moyens de rétention sont logés dans les trous des guides de la plaque ; les trous sont disposés face à face par paires et décalés entre eux une certaine distance (Δ) dans la direction de l'axe longitudinal des guides de façon qu'en y montant les moyens, une pression frontale d'alignement est créée entre les deux guides.

On remarque que le décalage (Δ) entre les trous des ailes du guide et les trous correspondants de la plaque d'union créent des forces d'union dans la direction de l'axe longitudinal du guide qui compensent les tensions de traction que peuvent produire les efforts latéraux sur les guides.

On remarquera aussi qu'avec le nouveau système, un seul usinage de précision sur la surface frontale du guide est nécessaire au lieu des deux usinages de précision sur les systèmes connus.

Les améliorations apportées par le système d'union objet de l'invention par rapport au système connu (finition de précision de la surface frontale des ailes de chaque guide et décalage entre trous de guides et de plaque d'union pour créer une pression frontale d'alignement au montage) se traduisent par un auto-alignement des guides qui réduit le temps de montage.

D'autre part :
- L'alignement est automatique sur les deux axes.
- l'alignement sur le axe OY se base sur :
   - La précision du positionnement des trous de la plaque d'union et des trous des guides.
   - La pression frontale exercée par les vis pour unir les deux guides.
   - La précision de l'équerre d'usinage des extrémités par rapport au champignon du guide.
- La rigidité sur l'axe OY est très supérieure que sur le guide conventionnel du fait qu'il ne permet pas le glissement entre la plaque et le guide.
- Bien que soumis à une traction, les guides ne se séparent pas, contrairement à ce qui se passe avec les systèmes d'union de guides antérieurs.

Pour mieux comprendre l'objet de la présente invention, les plans représentent une forme préférentielle de réalisation pratique, susceptible de modifications accessoires ne dénaturant pas son fondement.

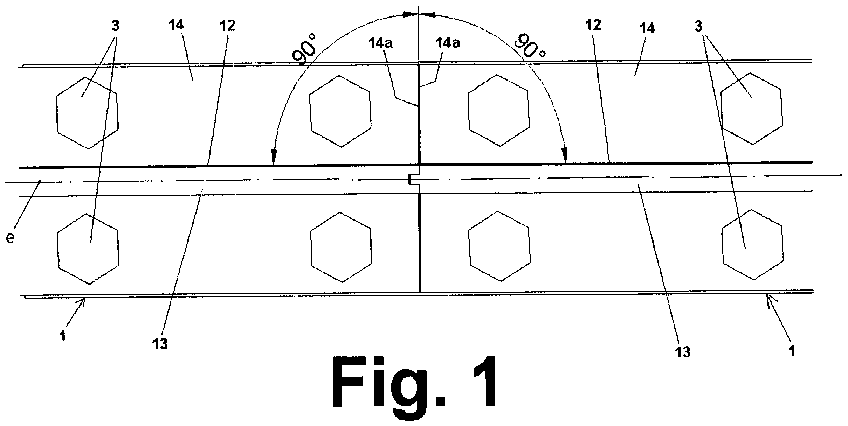

La figure 1 est une vue générale sur plan du système d'union avec auto-alignement pour guides d'ascenseur objet de l'invention.

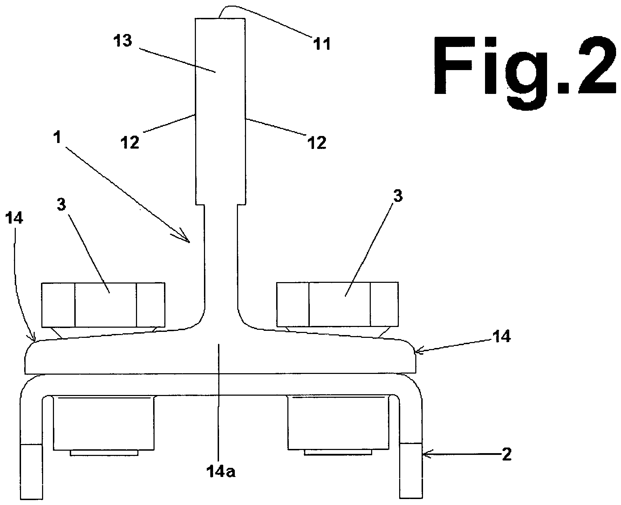

La figure 2 est une vue frontale de la figure précédente.
La figure 3a est une section longitudinale, en détail, pour un exemple de réalisation.
La figure 3b est une section longitudinale, en détail, pour un exemple de réalisation alternative.
La figure 4a est un détail agrandi de la zone d'union, suivant indication de la figure 3a.
La figure 4b est un détail agrandi de la zone d'union, suivant indication de la figure 3b.
La figure 4c est une vue sur plan de la figure 4a, sans vis (3).
Les figures 5a, 5b, 5c et 5d sont des exemples de réalisation de la plaque d'union (2) pour la réalisation des figures 3a et 4a.
Les figures 6a, 6b, 6c et 6d sont des exemples de réalisation de la plaque d'union (2) pour la réalisation des figures 3b et 4b.

Un exemple de réalisation pratique est décrit ci-dessous, non limitatif de la présente invention.

Le système d'union avec auto-alignement pour guides d'ascenseur objet de l'invention s'utilise sur des guides (1) formés d'une âme-champignon (13) et d'une aile (14) de chaque côté.

Les surfaces frontales (14a) des ailes (14) possèdent à l'origine une finition de précision formant un angle parfait de 90° par rapport aux surfaces latérales (12) du champignon (13) et de ce fait, au montage, les ailes (14) des deux guides (1) s'unissent bout à bout en contactant sur toute la surface frontale (14a) de leurs zones de contact.

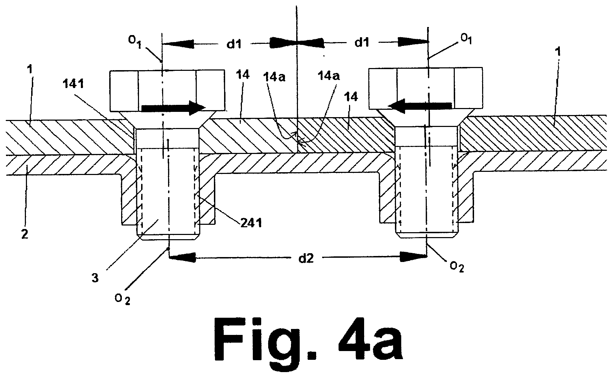

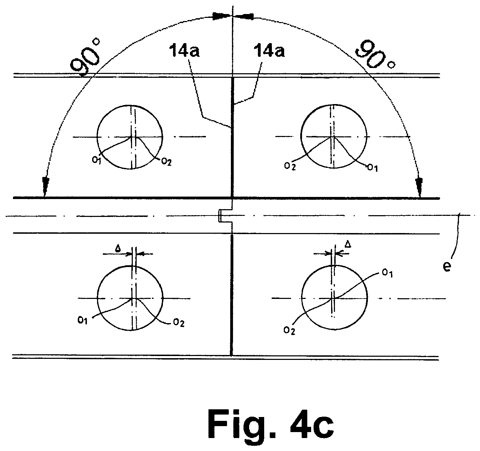

Chaque aile (14) possède à l'origine des trous (141), avec axe (O₁) ces trous (141) allant par paires disposées face à face : une paire ou plusieurs espacées par une distance préfixée, par exemple, la dernière des paires usinée à une distance (d₁) de l'extrémité du guide (1) -figure 4a-.

Il existe une plaque d'union (2) possédant à l'origine des trous (241), avec axe (O₂) disposés par paires mises face à face et en correspondance avec les trous (141) des ailes (14) et avec au moins deux paires de ces trous (241) espacées par une distance (d₂).

Des moyens de rétention (3) sont logés dans les trous (141) des guides (1) et dans les trous (241) de la plaque d'union (2) dans le but de joindre fixement et solidairement la plaque d'union (2) et les ailes (14) des deux guides (1) à unir.

Les trous (141), (241) mis face à face par paires sont décalés entre eux, c'est-à-dire que leurs axes (O₁), (O₂) sont décalés dans le sens longitudinal des guides (sur la figure 4a, la distance est 2Δ = 2d₁ - d₂) de façon que qu'en y montant les vis (3) une pression frontale d'alignement est créée entre les deux guides (1).

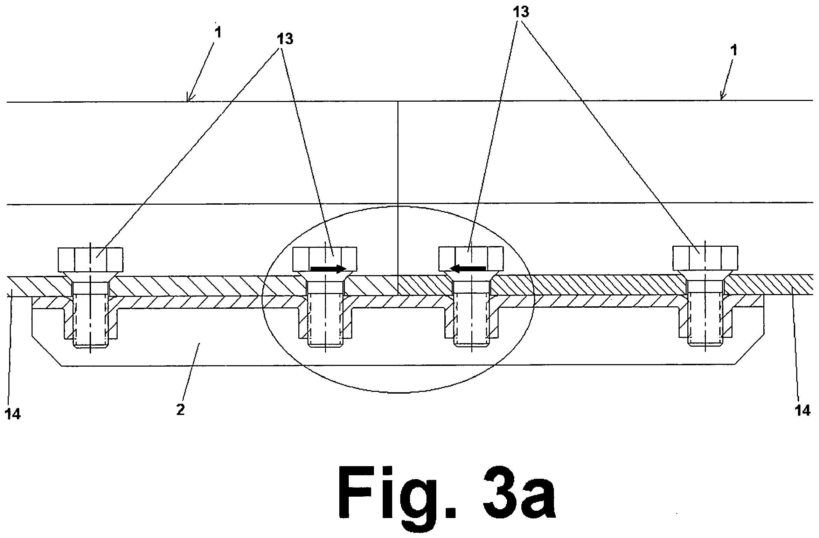

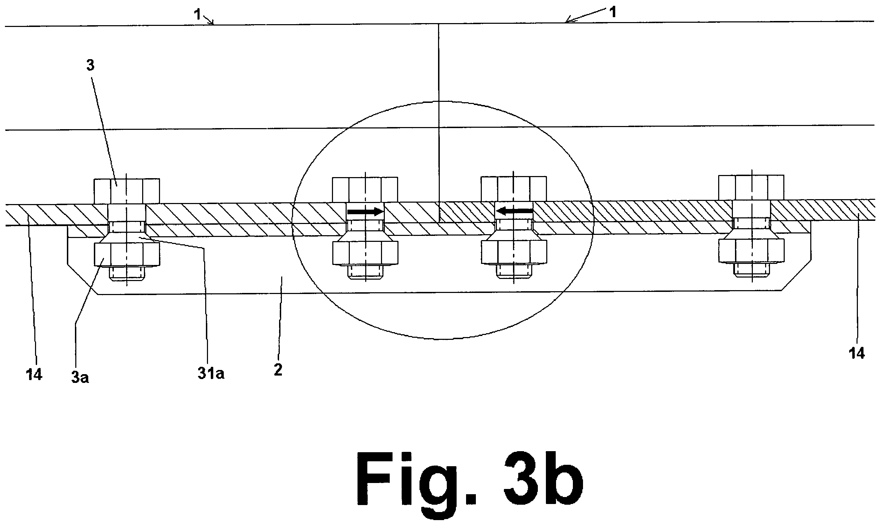

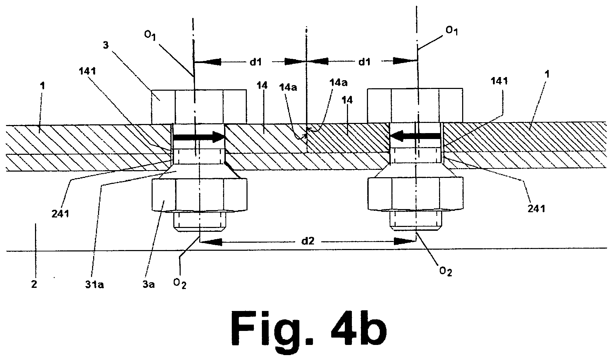

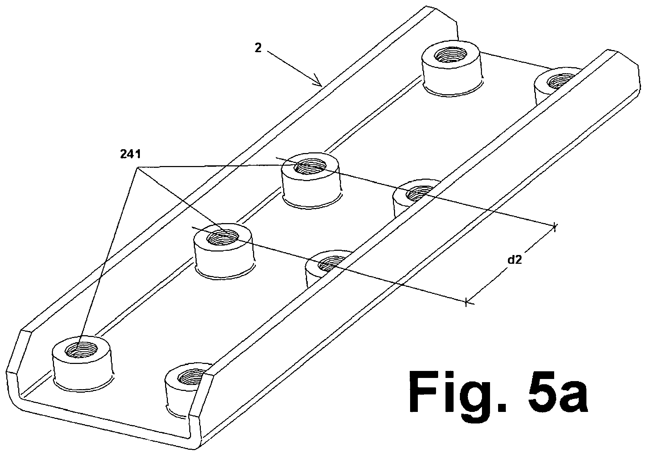

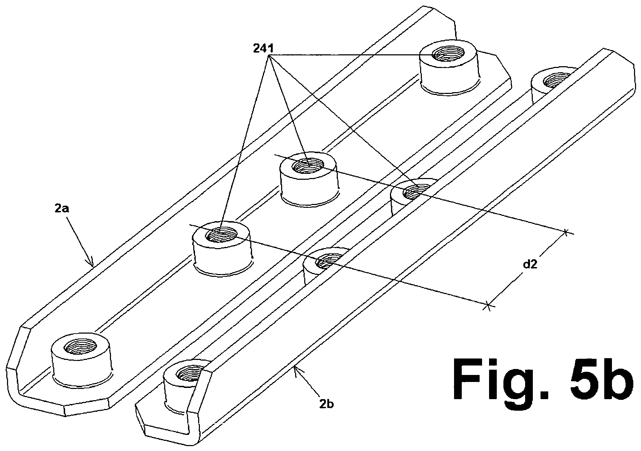

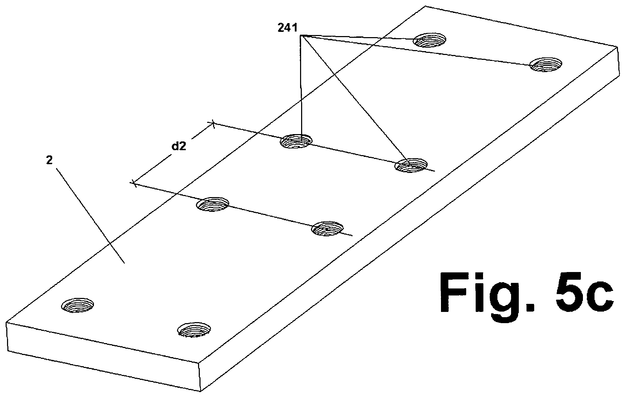

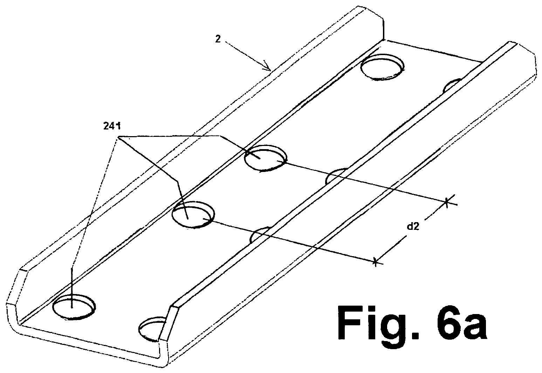

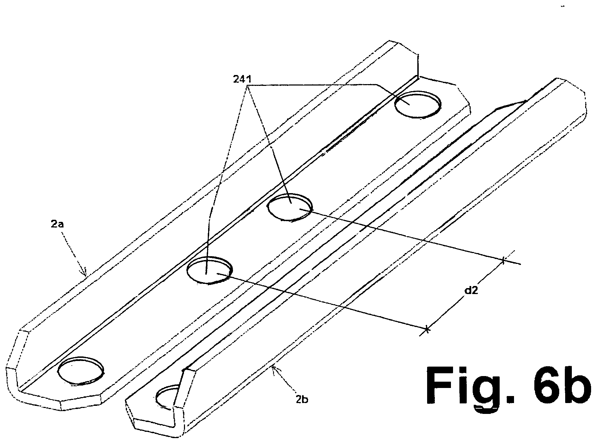

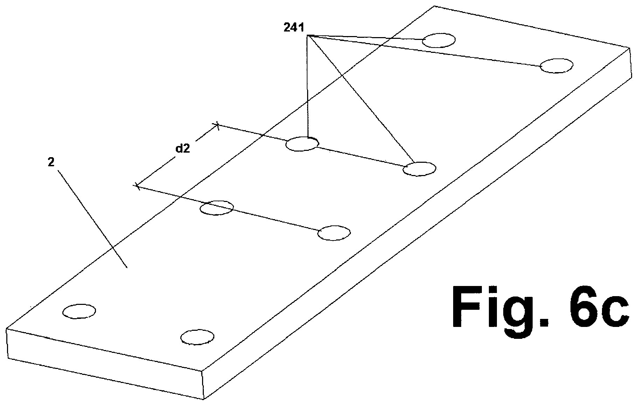

A partir de cette conception de base, l'objet de l'invention inclut toutes les réalisations qui n'altèrent, ne changent ou ne modifient l'essentialité proposée ; par exemple et en particulier :
- Aux effets de l'invention, il est indifférent et accessoire que la plaque d'union (2) soit en tôle ou du type platine et qu'elle soit réalisée en une seule pièce (comme sur les figures 5a, 6a ou 5c, 6c) ou en deux pièces indépendantes (comme sur les figures 5b, 6b) ;
- Aux effets de l'invention il est indifférent et accessoire que la plaque d'union (2) possède des trous (241) filetés et que les moyens d'union soient des vis (3) traversant les trous (141) des guides pour se visser dans les trous (241) de la plaque d'union (2) -comme sur les figures 3a, 4a-, ou que la plaque d'union (2) possède des trous (241) passants et que les moyens d'union soient des vis (3) traversant les deux trous (141), (241) alignés avec le décalage Δ entre eux, pour se visser (3) dans un écrou auto-centreur (3a) -comme sur les figures 3b, 4b-.

Dans la réalisation des figures 3a, 4a, les plaques d'union (2) ont des trous filetés (241), qu'elles soient en tôle -figures 5a, 5b-qu'il s'agisse d'une platine -figure 5c-.

Le filet des trous (241) des plaques d'union (2) peut être réalisé par emboutissage dans la tôle -comme sur les figures 3a et 4a- ou par installation d'écrous fixés à l'origine avant le montage par soudure ou par toute autre système de fixation.

Dans la réalisation des figures 3b, 4b, les plaques d'union (2) ont des trous passants (241), qu'elles soient en tôle -figures 6a, 6b- ou type platine -figure 6c-.

Les écrous auto-centreurs (3a) forment ou définissent une tête en rampe (31a) reposant contre la plaque d'union (2), en s'auto-centrant dans son trou passant (241).

Dans les deux réalisations, le système d'union avec auto-alignement pour guides d'ascenseur objet de l'invention a aussi prévu l'utilisation de bouts de guide (1) comme plaques d'union (2), utilisés en position inversée.

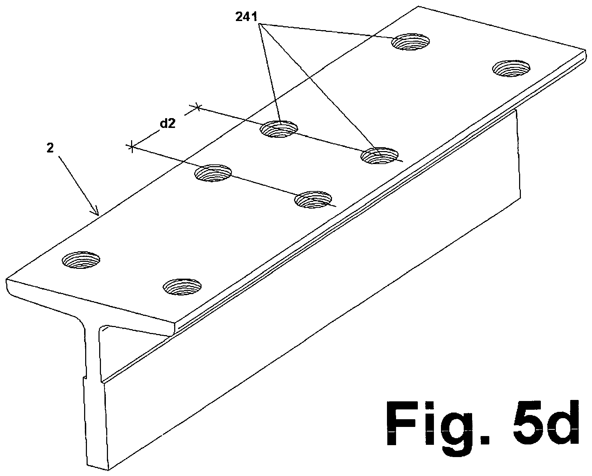

Dans la réalisation de la figure 5d il suffit de réaliser des filetages dans les trous (141) des bouts de guide (1) pour que ces trous se comportent comme des trous (241) et que le guide (1), en position inversée, face office de plaque d'union (2).

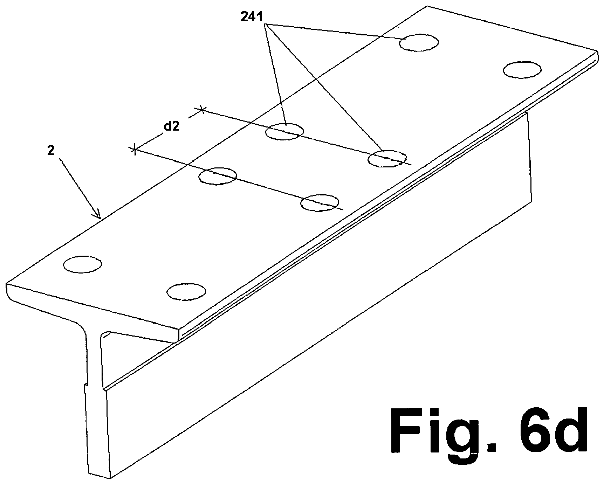

Dans la réalisation de la figure 6d, le filetage n'est même pas nécessaire car on peut utiliser directement des bouts de guide (1) en position inversée.

## Revendications

1. Système d'accouplement à auto-alignement, pour guides d'ascenseur, le système comprenant des guides (1) d'ascenseur avec âme-champignon (13) et ailes (14) latérales et des plaques d'union (2) de ces guides (1) entre eux:
a) les ailes (14) des deux guides (1) à unir se joignent bout à bout en contactant parfaitement sur toute la surface frontale (14a) de leurs zones de contact:
b) chaque aile (14) forme des trous passants (141);
c) une plaque d'union (2) forme des trous passants (241) en correspondance avec les trous (141) des ailes (14);
d) il existe des moyens de rétention (3) logés dans ces trous (141) des guides (1) et (241) de la plaque (2);
**caractérisé en ce que**:
e) les surfaces frontales (14a) des guides (1) forment une finition de précision faisant un angle parfait de 90° entre ces surfaces frontales (14a) par rapport à l'axe longitudinal (e) de chaque guide (1) et;
f) les trous (141), (241) étant mis face à face par paires, sont décalés entre eux une certaine distance (Δ) dans la direction de l'axe longitudinal (e) des guides (1) de façon qu'en y montant les moyens de rétention (3), une pression frontale d'alignement est créée entre les deux guides (1).

2. Système d'accouplement à auto-alignement, pour guides d'ascenseur, suivant la revendication précédente, caractérisé du fait que:
a) la plaque d'union (2) forme des trous filetés (241) en correspondance avec les trous (141) des ailes (14) ;
b) des vis de rétention (3) sont logés dans ces trous (141) des guides (1) et filetés dans les trous (241) de la plaque (2).

3. Système d'accouplement à auto-alignement, pour guides d'ascenseur, suivant revendication 1, caractérisé du fait que :
a) la plaque d'union (2) forme des trous passants (241) en correspondance avec les trous (141) des ailes (14) ;
b) des vis de rétention (3) sont logés dans ces trous (141), (241) et filetés dans un écrou auto-centreur (3a).

4. Système d'accouplement à auto-alignement, pour guides d'ascenseur, suivant la revendication 2, caractérisé du fait que :
a) les trous (141) de chaque aile (14) sont disposés par paires disposées face à face, dont la dernière est usinée à une distance quelconque d₁ de l'extrémité du guide (1) ;
b) les trous filetés (241) de la plaque d'union (2) sont disposés par paires disposées face à face ; au moins deux paires espacées entre elles par une distance d₂ ;
c) les trous (141), (241) disposés face à face par paires sont décalés entre eux une certaine distance Δ, avec 2Δ = 2d₁ - d₂ ; de façon qu'en y montant les vis (3) une pression frontale d'alignement est créée entre les deux guides (1).

5. Système d'accouplement à auto-alignement, pour guides d'ascenseur, suivant revendication 3, caractérisé du fait que :
a) les trous (141) de chaque aile (14) sont disposés par paires mises face à face, dont la dernière est usinée à une distance quelconque d₁ de l'extrémité du guide (1) ;
b) les trous passants (241) de la plaque d'union (2) sont disposés par paires mises face à face, avec au moins deux paires espacées entre elles par une distance d₂ ;
c) les trous (141), (241) disposés face à face par paires sont décalés entre eux une certaine distance Δ, avec 2Δ = 2d₁ - d₂ de façon qu'en y logeant les vis (3) et en les fixant avec des écrous auto-centreurs (3a), une pression frontale d'alignement est créée entre les deux guides (1).

## Patentansprüche

1. Verbindungssystem mit Selbstausrichtung für Aufzugführungen, das System umfasst Aufzugführungen (1) mit einem pilzförmigen Profilsteg (13) und seitlichen Flügeln (14) und Verbindungsplatten (2) der besagten Führungen (1) dazwischen:
a) die Flügel (14), die zwei zu verbindenden Führungen (1) entsprechen, passen voll und ganz zueinander und haben perfekten Kontakt auf der gesamten vorderen Fläche (14a) ihrer Kontaktzonen;
b) jeder Flügel (14) umfasst Durchgangsöffnungen (141);
c) eine Verbindungsplatte (2), die Durchgangsöffnungen (241) umfasst, in Übereinstimmung mit den Öffnungen (141) der Flügel (14);
d) es sind Haltevorrichtungen (3) vorhanden, die in den besagten Öffnungen (141) der Führungen (1) und (241) der Platte (2) untergebracht sind;
**gekennzeichnet dadurch, dass**:
e) die vorderen Flächen (14a) eine Präzisionsoberfläche mit einem perfekten Winkel von 90° zwischen den besagten vorderen Flächen (14a) im Verhältnis zur Längsachse (e) jeder Führung (1) umfassen und
f) die Öffnungen (141), (241) die sich paarweise gegenüberliegen sind in einem bestimmten Abstand voneinander versetzt (Δ) in Richtung der Längsachse (e) der Führungen (1), so, dass beim Montieren der Haltevorrichtungen (3) darin ein frontaler Ausrichtungsdruck zwischen den beiden Führungen (1) aufgebaut wird.

2. Verbindungssystem mit Selbstausrichtung für Aufzugführungen nach dem vorhergehenden Anspruch, **gekennzeichnet dadurch, dass**:
a) die Verbindungsplatte (2) Gewindeöffnungen (241) umfasst, in Übereinstimmung mit den Öffnungen (141) der Flügel (14);
b) Halteschrauben (3) vorhanden sind, die in den besagten Öffnungen (141) der Führungen (1) und den Gewindeöffnungen in den Öffnungen (241) der Platte (2) untergebracht sind;

3. Verbindungssystem mit Selbstausrichtung für Aufzugführungen nach Anspruch 1, **gekennzeichnet dadurch, dass**:
a) die Verbindungsplatte (2) Durchgangsöffnungen (241) umfasst, in Übereinstimmung mit den Öffnungen (141) der Flügel (14);
b) Halteschrauben (3) vorhanden sind, die in den besagten Öffnungen (141) und den Gewindeöffnungen in einer selbstzentrierenden Mutter (3a) untergebracht sind.

4. Verbindungssystem mit Selbstausrichtung für Aufzugführungen nach Anspruch 2, **gekennzeichnet dadurch, dass**:
a) die Öffnungen (141) jedes Flügels (14) in gegenüberliegenden Paaren angeordnet sind, das letzte davon ist in einem Abstand d₁ am Ende der Führung (1) eingearbeitet;
b) die Gewindeöffnungen (241) der Verbindungsplatte (2) in gegenüberliegenden Paaren angeordnet sind; mindestens zwei räumlich in einem Abstand d₂ voneinander getrennte Paare;
c) die Öffnungen (141), (241) die sich paarweise gegenüberliegen, in einem bestimmten Abstand voneinander versetzt sind (Δ) und 2Δ = 2d₁ - d₂ erfüllen, so dass beim Montieren der Schrauben (3) ein frontaler Ausrichtungsdruck zwischen den beiden Führungen (1) aufgebaut wird.

5. Verbindungssystem mit Selbstausrichtung für Aufzugführungen nach Anspruch 3, **gekennzeichnet dadurch, dass**:
a) die Öffnungen (141) jedes Flügels (14) in gegenüberliegenden Paaren angeordnet sind, das letzte davon ist in einem Abstand d₁ am Ende der Führung (1) ausgeführt;
b) die Gewindeöffnungen (241) der Verbindungsplatte (2) in gegenüberliegenden Paaren angeordnet sind; mindestens zwei in einem Abstand d₂ voneinander getrennte Paare;
c) die Öffnungen (141), (241) die sich paarweise gegenüberliegen, in einem bestimmten Abstand voneinander versetzt sind (Δ) und 2Δ = 2d₁ - d₂ erfüllen, so dass beim Montieren der Schrauben (3) und dem Befestigen mit selbstzentrierenden Muttern (3a) ein frontaler Ausrichtungsdruck zwischen den beiden Führungen (1) aufgebaut wird.

## Claims

1. Connection system, with self-alignment, for elevator guides, the system consists of guides (1) of elevator, with a core-carriage bolt (13) and side wings (14) and connection plates (2) of said guides (1) between each other:
a) the wings (14) corresponding to two guides (1) to be connected coincide fully with each other, making perfect contact in the entire front surface (14a) of its zones of contact;
b) each wing (14) forms through-holes (141);
c) there is a connection plate (2) that forms through-holes (241) in correspondence with the holes (141) of the wings (14);
d) there are means of retention (3) lodged in said holes (141) of the guides (1) and (241) of the plate (2);
**characterized in that**:
e) the front surfaces (14a) form a precision finish keeping a perfect 90° angle between said front surfaces (14a) with respect to the longitudinal axis (e) of each guide (1) and
f) the holes (141), (241) facing each other in pairs are separated from each other a certain distance (Δ) in the direction of the longitudinal axis (e) of the guides (1), so that mounting the means of retention (3) a front pressure of alignment is created between both guides (1).

2. Connection system, with self-alignment, for elevator guides, according to the foregoing claim, **characterized in that**:
a) the connection plate (2) forms through-holes (241) in correspondence with the holes (141) of the wings (14);
b) there are retention screws (3) lodged in said holes (141) of the guides (1) and threaded in the holes (241) of the plate (2).

3. Connection system, with self-alignment, with elevator guides, according to claim 1, **characterized in that**:
a) the connection plate (2) forms through-holes (241) in correspondence with the holes (141) of the wings (14);
b) there are retention screws (3) lodged in said holes (141), (241) and threaded in a self-centering nut (3a).

4. Connection system, with self-alignment, for elevator guides, according to claim 2, **characterized in that**:
a) the holes (141) of each wing (14) are placed opposite each other in pairs, the last of which is machined at any distance d₁ from the end of the guide (1);
b) the threaded holes (241) of the connection plate (2) are placed opposite each other in pairs; at least two pairs spaced between each other a distance d₂;
c) the holes (141), (241) opposite each other in pairs are separated from each other a certain distance of offset (Δ) verifying that 2Δ = 2d₁ - d₂; so that, when the screws (3) are mounted on them, a front pressure is created of alignment between both guides (1).

5. Connection system, with self-alignment, for elevator guides, according to claim 3, **characterized in that**:
a) the holes (141) of each wing (14) are placed opposite each other in pairs, the last of which is machined at any distance d₁ from the end of the guide (1);
b) the threaded holes (241) of the connection plate (2) are placed opposite each other in pairs; at least two pairs spaced between each other a distance d₂;
c) the holes (141), (241) opposite each other in pairs are separated from each other a certain distance of offset (Δ) verifying that 2Δ = 2d₁ - d₂; so that, when the screws are (3) installed in them and fastened with self-centering nuts (3a), front pressure of alignment between both guides (1) is created.
